# EUROPÄISCHE PATENTSCHRIFT

(11) **EP 0 945 261 B1**
(45) Veröffentlichungstag und Bekanntmachung des Hinweises auf die Patenterteilung: **07.12.2005**
(21) Anmeldenummer: 99105344.8
(22) Anmeldetag: 16.03.1999
(51) Int. Cl.: B32B 27/36, B65D 65/40

(54) **Polyesterfolie mit hoher Sauerstoffbarriere, Verfahren zu ihrer Herstellung und ihre Verwendung**
Polyester film with high oxygen barrier property, its use and process for its production
Film en polyester à haute capacité d'arrêt de l'oxygène, son procédé de fabrication et son utilisation

(30) Priorität: 25.03.1998 DE 19813266
(43) Veröffentlichungstag der Anmeldung: 29.09.1999
(73) Patentinhaber: Mitsubishi Polyester Film GmbH, 65203 Wiesbaden (DE)
(72) Erfinder: Peiffer, Herbert, Dr., 55126 Mainz (DE); Bennet, Cynthia, Dr., 55232 Alzey (DE); Hilkert, Gottfried, Dr., 55291 Saulheim (DE)
(74) Vertreter: Schweitzer, Klaus

(56) Entgegenhaltungen:
- EP-A- 0 602 964
- EP-A- 0 785 067
- EP-A- 0 822 213
- EP-A- 0 878 297
- EP-A- 0 878 298

## Beschreibung

Die Erfindung betrifft eine transparente, biaxial orientierte Polyesterfolie mit einer Basisschicht, die zu mindestens 80 Gew.-% aus einem thermoplastischen Polyester besteht, und einer Deckschicht, die eine gute mechanische Stabilität besitzt. Die Erfindung betrifft weiterhin ein Verfahren zur Herstellung der Folie und ihre Verwendung.

In vielen Fällen wird bei Lebensmittelverpackungen eine hohe Sperrwirkung gegenüber Gasen, Wasserdampf und Aromastoffen verlangt. Ein gängiges Verfahren, solche Verpackungen herzustellen, besteht darin, die dafür verwendeten Kunststoffolien mit Aluminium im Hochvakuum zu bedampfen bzw. zu metallisieren. Ein weiteres gängiges Verfahren besteht darin, die Folien mit keramischen Materialien, wie SiOₓ, AlOₓ oder MₓOₓ zu beschichten. Die Sperrwirkung gegenüber den oben genannten Stoffen hängt im wesentlichen von der Art der Polymeren in der Folie und der Güte der aufgebrachten Sperrschichten ab. So haben metallisierte, biaxial orientierte Polyesterfolien eine sehr hohe Sperrwirkung gegenüber Gasen wie Sauerstoff und Aromastoffen. Aufgrund ihrer guten Sperreigenschaften werden mit metallisierten bzw. keramisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen Chips u.a.) oder kohlensäurehaltigen Getränken (in Standbeuteln; engl: pouches). Zukünftig geht die Forderung der Verpackungsindustrie in Richtung einer noch höheren Barriere bei solchen beschichteten Folien. Andererseits gibt es Verpackungen, die eine geringe Barriere aufweisen müssen, aber transparent und preiswert sein sollen. Hier werden z.B. mit Polyvinylidenchlorid (PVDC) beschichtete Polypropylenfolien verwendet. Mit PVDC beschichtete Folien sind zwar transparent, aber die Beschichtung erfolgt - ebenso wie die Metallisierung - in einem zweiten Arbeitsgang, der die Verpackung wiederum deutlich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Einige Rohstoffe sind zudem für die Herstellung von Lebensmittelverpackungen ungeeignet bzw. nicht amtlich zugelassen.

Bei all diesen Verpackungen ist eine gute mechanische Stabilität gegenüber Einstichen oder Einrissen (puncture resistance) wichtig, um das Füllgut zu schützen.

Die EP-A-0 822 213 beschreibt Polyesterrohstoffe, die mindestens einen Dicarbonsäurebestandteil, ausgewählt aus Terephthalsäure, isophthalsäure und Naphthalindicarbonsäure, enthalten, wobei der Polyalkylengehalt 0.001 bis 10 Gew.-% beträgt. Ausführungen mit Naphthalindicarbonsäure und Terephthalsäure sind jedoch dort nicht beschrieben.

Aufgabe der vorliegenden Erfindung ist es, eine transparente, biaxial orientierte Polyesterfolie zur Verfügung zu stellen, die sich einfach und preiswert herstellen läßt, die die guten physikalischen Eigenschaften der bekannten Folien besitzt und die
- unbeschichtet eine gute Sperrwirkung gegen Gase aufweist,
- nach der Metallisierung oder Beschichtung mit keramischen Materialien eine noch höhere Barriere besitzt, und
- eine gute Festigkeit gegenüber Einstich- oder Einrißverletzungen aufweist.

Gelöst wird die Aufgabe durch eine biaxial orientierte Polyesterfolie mit einer Basisschicht, die zu mindestens 80 Gew.-% aus (mindestens) einem thermoplastischen Polyester besteht und mindestens einer Deckschicht, wobei die Folie dadurch gekennzeichnet ist, daß die Deckschicht(en) aus einem Polymer oder einem Gemisch von Polymeren besteht/bestehen, das mindestens 40 Gew.-% an Ethylen-2,6-naphthalat-Einheiten und bis zu 40 Gew.-% an Ethylenterephthalat-Einheiten und gegebenenfalls bis zu 60 % Einheiten aus cycloaliphatischen oder aromatischen Diolen und/oder Dicarbonsäuren enthält, mit der Maßgabe, daß der Diethylenglykolgehalt der Basisschicht im Bereich von 0.9 bis 3.0 %, bevorzugt 1.0 bis 2.0 % und besonders bevorzugt 1.2 bis 1.8 % liegt. Die erfindungsgemäße Folie weist allgemein eine Sauerstoffpermeation von weniger als 80 cm³/m² bar d, bevorzugt weniger als 75 cm /m³ bar d, besonders bevorzugt weniger als 70 cm³/m² bar d auf.

Bevorzugt ist eine Polyesterfolie, in der die Polymere der Deckschicht mindestens 65 Gew.-% an Ethylen-2,6-naphthalat-Einheiten und bis zu 35 Gew. -% an Ethylen-terephthalat-Einheiten enthalten. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Bisphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Diethylenglykol entsteht zwangsläufig in einer Nebenreaktion bei der Herstellung von Polyester aus Dicarbonsäuren und Ethylenglykol. Da Diethylenglykol ebenfalls ein Diol ist, wird es neben dem Ethylenglykol ebenfalls in die Polyesterkette eingebaut. Die Menge der so entstehenden Diethylenglykol-Einheiten in der Kette hängt von den Reaktionsbedingungen in der Polykondensation (Temperatur, Verweilzeit, Druck und Katalysator) ab. Andererseits ist es auch möglich, den Diethylenglykol-Gehalt des Polyesters für die Basisschicht durch gezielte Zugabe von geringen Mengen Diethylenglykol zum Reaktionsgemisch zu steuern.

Gegenstand der vorliegenden Erfindung ist auch ein Verfahren zur Herstellung dieser Folie. Es umfaßt das
a) Herstellen einer Folie aus Basis- und Deckschicht(en) durch Coextrusion,
b) biaxiale Verstrecken der Folie und
c) Thermofixieren der verstreckten Folie.

Zur Herstellung der Deckschicht werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsstreckung und sogar eine weitere Querstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH, wobei n eine ganze Zahl von 3 bis 6 darstellt, verzweigte aliphatische Glykole mit bis zu 6 Kohlenstoff-Atomen, aromatische Diole der allgemeinen Formel HO-C₆H₄-X-C₆H₄-OH, wobei X für -CH₂-, -C(CH₃)₂-,-C(CF₃)₂-, -O-, -S- oder -SO₂- steht, oder Bisphenole der allgemeinen Formel HO-C₆H₄-C₆H₄-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestem und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Bei der Herstellung der Polyester für die Basisschicht werden die Bedingungen (Katalysator, Temperatur, Verweilzeit und Druck und ggf. zugesetzte Diethylenglykol-Mengen) so gewählt, daß der resultierende Diethylenglykol-Gehalt im Bereich von 0.9 bis 3.0 Gew.-%, bevorzugt 1.0 bis 2.0 Gew.-% und besonders bevorzugt 1.2 bis 1.8 Gew-% liegt.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymeren und korreliert mit der Schmelzeviskosität. Je nach chemischer Zusammensetzung des verwendeten Polymeren ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 900, insbesondere zwischen 500 und 700. Falls erwünscht, kann an den jeweiligen Granulaten eine Festphasenkondensation durchgeführt werden, um die benötigten Schmelzeviskositäten der Materialien einzustellen. Allgemein gilt, daß sich die Schmelzeviskositäten der Polymerschmelzen für Basis- und Deckschicht(en) um nicht mehr als den Faktor 5, vorzugsweise den Faktor 2 bis 3 unterscheiden sollten.

Die Polymere für die Deckschicht können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht teilkristallinen Charakter aufweist.

In einer weiteren Ausführungsform umfaßt die Folie auf der der Deckschicht abgewandten Seite eine weitere Deckschicht aus Polyethylenterephthalat, die Pigmente enthält.

Die erfindungsgemäße Folie zeigt eine überraschend hohe Sauerstoffbarriere. Werden dagegen für die Deckschicht(en) Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht, die zwischen 5 und 40 Gew.-% Ethylen-2,6-naphthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Weiterhin zeichnen sich die erfindungsgemäßen Folien dadurch aus, daß die Basisschicht einen Diethylenglykol-Gehalt im Bereich von 0.9 bis 30 Gew.-%, bevorzugt 1.0 bis 2.0 Gew.-% und besonders bevorzugt 1.2 bis 1.8 Gew.% liegt. Wenn diese Grenzen eingehalten werden, haben die Folien gute mechanische Festigkeiten, insbesondere gegen Einstich und Einreißverletzungen.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin odervemetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wäßriger Dispersionen vor der Querverstreckung auf die Folie aufzubringen.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln.

Zur Charakterisierung der Rohstoffe und der Folien wurden die folgenden Methoden benutzt:

Die Messung der Sauerstoffbarriere erfolgte mit einem OX-TRAN 2/20 von Mocon Modern Controls (USA) entsprechend DIN 53 380, Teil 3.

Zur Bestimmung des SV-Wertes (SV = solution viscosity) wurde eine Polyester-Probe in einem Lösungsmittel (Dichloressigsäure) in einer Konzentration von 1.0 Gew.-% gelöst. Die Viskosität dieser Lösung sowie die Viskosität des reinen Lösungsmittels wurden in einem Ubbelohde-Viskosimeter gemessen. Aus den beiden Werten wurde der Quotient (= relative Viskosität ηᵣₑₗ) ermittelt, davon 1,000 abgezogen und dieser Wert mit 1000 multipliziert. Das Resultat war der SV-Wert ("solution viscosity").

Die Bestimmung des DEG-Gehaltes von Polyester erfolgt mittels Gaschromotografie. Vier Gew.-% der Polyesterprobe wird in 1.5 n methanolischer Kalilauge unter Rühren so lange unter Rückfluß gekocht, bis die Probe vollständig verseift ist. Es wird ca. 0.1 Gew.-% eines geeigneten Standards, z.B. 2,5,8,11,14-Pentaoxapentadekan, entweder vor oder nach der Verseifung genau dazugewogen. Die Natronlauge wird mit 20 bis 30%iger Salzsäure neutralisiert und die Lösung anschließend filtriert. Die Menge Diethylenglykol (Gew.-% bezogen auf die Polyesterprobe) wird mit einem Gaschromotographen mit FID-Detektor (z.B. Perkin-Elmer F20) bestimmt. Bedingungen:

| | |
|---|---|
| Trägermaterial | Haloport F, 30/60 mesh |
| Stationäre Phase | Carbowax 20 M |
| Säule | 2 m, 2 mm Durchmesser, Glas |
| Temperatur | 170 °C |
| Trägergas | He 35 ml/Min. |
| Hilfsgase | He₂, 35 ml/Min. |
| | Luft, 330 ml/Min. |
| Einspritzmenge | 1 µl |
| Eichlösungen | 0.5 Gew.-% Diethylenglykol in Ethylenglykol mit internem Standard |
| | 1.5 Gew.-% Diethylenglykol in Ethylenglykol mit internem Standard |

## Patentansprüche

1. Transparente, biaxial orientierte Polyesterfolie mit einer Basisschicht, die zu mindestens 80 Gew.-% aus einem thermoplastischen Polyester besteht, und mindestens einer Deckschicht, **dadurch gekennzeichnet, daß** die Deckschicht aus einem Polymer oder einem Gemisch von Polymeren besteht, das Ethylen-2,6-naphthalat-Einheiten in einer Menge von mindestens 40 Gew.-% und Ethylen-terephthalat-Einheiten in einer Menge von bis zu 40 Gew.-% enthält und gegebenenfalls Einheiten aus cycloaliphatischen oder aromatischen Diolen und/oder Dicarbonsauren in einer Menge bis zu 60 Gew.-%, mit der Maßgabe, daß der Diethylenglykol-Gehalt der Basisschicht im Bereich von 0.9 bis 3.0 Gew.-% liegt.

2. Folie gemäß Anspruch 1, **dadurch gekennzeichnet, daß** die Deckschicht mindestens 65 Gew.-%, bevorzugt mindestens 70 Gew.-%, an Ethylen-2,6-naphthalat-Einheiten enthält.

3. Folie gemäß Anspruch 1 oder 2, **dadurch gekennzeichnet, daß** sie eine Sauerstoffpermeation von weniger als 80 cm³/m² bar d, bevorzugt weniger als 75 cm³/m² bar d, besonders bevorzugt weniger als 70 cm³/m² bar d, aufweist.

4. Folie gemäß einem oder mehreren der Ansprüche 1 bis 3, **dadurch gekennzeichnet, daß** die Deckschicht eine Dicke von 0,2 bis 6 µm, vorzugsweise von 0,3 bis 5,5 µm, besonders bevorzugt von 0,3 bis 5,0 µm, aufweist.

5. Folie gemäß einem oder mehreren der Ansprüche 1 bis 4, **dadurch gekennzeichnet, daß** sie zweischichtig ist und aus der Basisschicht und der Deckschicht besteht.

6. Folie gemäß einem oder mehreren der Ansprüche 1 bis 4, **dadurch gekennzeichnet, daß** sie dreischichtig ist und aus der Basisschicht und je einer Deckschicht auf beiden Seiten der Basisschicht besteht.

7. Folie gemäß einem oder mehreren der Ansprüche 1 bis 6, **dadurch gekennzeichnet, daß** mindestens eine der Deckschichten pigmentiert ist.

8. Folie gemäß einem oder mehreren der Ansprüche 1 bis 7, **dadurch gekennzeichnet, daß** sie auf mindestens einer Seite mit einer Corona behandelt ist.

9. Folie gemäß einem oder mehreren der Ansprüche 1 bis 8, **dadurch gekennzeichnet, daß** sie auf mindestens einer Seite in-line beschichtet ist.

10. Verfahren zur Herstellung der Folie nach einem oder mehreren der Ansprüche 1 bis 9, umfassend die Schritte
a) Herstellen einer Folie aus Basis- und Deckschicht(en) durch Coextrusion,
b) biaxiales Verstrecken der Folie und
c) Thermofixieren der verstreckten Folie,
wobei die Basisschicht zu mindestens 80 Gew.-% aus einem thermoplastischen Polyester besteht, und mindestens eine Deckschicht aus einem Polymer oder einem Gemisch von Polymeren besteht, das mindestens 40 Gew.-% Ethylen-2,6-naphthalat-Einheiten enthält und Ethylen-terephthalat-Einheiten in einer Menge von bis zu 40 Gew.-% und 0 bis 60 Gew.-% an Einheiten aus cycloaliphatischen oder aromatischen Diolen und/oder Dicarbonsäuren enthält, mit der Maßgabe, daß der Diethylenglykol-Gehalt der Basisschicht im Bereich von 0.9 bis 3.0 Gew.-% liegt.

11. Verwendung der Folie nach einem oder mehreren der Ansprüche 1 bis 9 zum Verpacken von Nahrungs- und Genußmitteln.

12. Verwendung der Folie nach einem oder mehreren der Ansprüche 1 bis 9 in einer metallisierten Verpackung.

13. Verwendung der Folie nach einem oder mehreren der Ansprüche 1 bis 9 in einer Verpackung mit einer keramischen Oberflächenbeschichtung.

## Claims

1. A transparent, biaxially oriented polyester film having a base layer at least 80 % by weight of which is composed of a thermoplastic polyester, and having at least one outer layer, wherein the outer layer is composed of a polymer or a mixture of polymers which comprises at least 40 % by weight of ethylene 2,6-naphthalate units and up to 40 % by weight of ethylene terephthalate units and, if desired, up to 60 % by weight of units from cycloaliphatic or aromatic diols and/or dicarboxylic acids, with the proviso that the diethylene glycol content of the base layer is in the range from 0.9 to 3.0 % by weight.

2. A film as claimed in claim 1, wherein the outer layer comprises at least 65 % by weight, preferably at least 70 % by weight, of ethylene 2,6-naphthalate units.

3. A film as claimed in claim 1 or 2 which has an oxygen permeability of less than 80 cm³/m² bar d, preferably less than 75 cm³/m² bar d, particularly preferably less than 70 cm³/m² bar d.

4. A film as claimed in one or more of claims 1 to 3, wherein the outer layer has a thickness of from 0.2 to 6 µm, preferably from 0.3 to 5.5 µm, particularly preferably from 0.3 to 5.0 µm.

5. A film as claimed in one or more of claims 1 to 4 which has two layers and is composed of the base layer and the outer layer.

6. A film as claimed in one or more of claims 1 to 4 which has three layers and is composed of the base layer and an outer layer on each of the two sides of the base layer.

7. A film as claimed in one or more of claims 1 to 6, wherein at least one of the outer layers has been pigmented.

8. A film as claimed in one or more of claims 1 to 7 which has been corona-treated on at least one side.

9. A film as claimed in one or more of claims 1 to 8 which has been in-line coated on at least one side.

10. A process for producing the film as claimed in one or more of claims 1 to 9, encompassing the steps
a) production of a film from base and outer layer(s) by coextrusion,
b) biaxial orientation of the film and
c) heat-setting of the oriented film,
at least 80 % by weight of the base layer being composed of a thermoplastic polyester, and at least one outer layer being composed of a polyester or a mixture of polymers which comprises at least 40 % by weight of ethylene 2,6-naphthalate units and up to 40 % by weight of ethylene terephthalate units and from 0 to 60 % by weight of units from cycloaliphatic or aromatic diols and/or dicarboxylic acids, with the proviso that the diethylene glycol content of the base layer is in the range from 0.9 to 30 % by weight.

11. The use of a film as claimed in one or more of claims 1 to 9 for packaging foodstuffs and other consumable items.

12. The use of a film as claimed in one or more of claims 1 to 9 in metallized packaging.

13. The use of a film as claimed in one or more of claims 1 to 9 in packaging having a ceramic surface coating.

## Revendications

1. Film polyester transparent orienté biaxialement, ayant une couche de base, qui comprend au moins 80 % en poids d'un polyester thermoplastique et au moins une couche de recouvrement, **caractérisé en ce que** la couche de recouvrement se compose d'un polymère ou d'un mélange de polymères, qui comprend des motifs d'éthylène-2,6-naphtalate en une quantité d'au moins 40 % en poids et des motifs d'éthylène-téréphtalate en une quantité allant jusqu'à 40 % en poids et le cas échéant des motifs de diols cycloaliphatiques ou aromatiques et/ou d'acides dicarboxyliques en une quantité allant jusqu'à 60 % en poids, à la condition que la teneur en diéthylène glycol de la couche de base se situe dans l'intervalle de 0,9 à 3,0 % en poids.

2. Film selon la revendication 1, **caractérisé en ce que** la couche de recouvrement comprend au moins 65 % en poids, de préférence au moins 70 % en poids de motifs d'éthylène-2,6-naphtalate.

3. Film selon la revendication 1 ou 2, **caractérisé en ce qu'**il présente une perméation à l'oxygène inférieure à 80 cm³/m² bar d, de préférence inférieure à 75 cm³/m² bar d, tout particulièrement inférieure à 70 cm³/m² bar d.

4. Film selon l'une ou plusieurs des revendications 1 à 3, **caractérisé en ce que** la couche de recouvrement présente une épaisseur de 0,2 à 6 µm, de préférence de 0,3 à 5,5 µm, tout particulièrement de 0,3 à 5,0 µm.

5. Film selon l'une ou plusieurs des revendications 1 à 4, **caractérisé en ce qu'**il est bicouche et qu'il se compose de la couche de base et de la couche de recouvrement.

6. Film selon l'une ou plusieurs des revendications 1 à 4, **caractérisé en ce qu'**il est tricouche et qu'il se compose de la couche de base et d'une couche de recouvrement sur chaque face de la couche de base.

7. Film selon l'une ou plusieurs des revendications 1 à 6, **caractérisé en ce qu'**au moins une des couches de recouvrement est pigmentée.

8. Film selon l'une ou plusieurs des revendications 1 à 7, **caractérisé en ce qu'**il est traité corona au moins sur une face.

9. Film selon l'une ou plusieurs des revendications 1 à 8, **caractérisé en ce qu'**il est enduit en ligne sur au moins une face.

10. Procédé de fabrication du film selon l'une ou plusieurs des revendications 1 à 9, comprenant les étapes consistant à :
a) produire un film à base de couche(s) de base et de recouvrement par coextrusion
b) étirement biaxial du film et
c) thermofixage du film étiré,
où la couche de base se compose à au moins 80 % en poids d'un polyester thermoplastique, et au moins une couche de recouvrement se compose d'un polymère ou d'un mélange de polymères, qui comprend des motifs d'éthylène-2,6-naphtalate en une quantité d'au moins 40 % en poids et des motifs d'éthylène-téréphtalate en une quantité allant jusqu'à 40 % en poids et le cas échéant des motifs de diols cycloaliphatiques ou aromatiques et/ou d'acides dicarboxyliques en une quantité allant jusqu'à 60 % en poids, à la condition que la teneur en diéthylène glycol de la couche de base se situe dans l'intervalle de 0,9 à 3,0 % en poids.

11. Utilisation du film selon l'une ou plusieurs des revendications 1 à 9 pour l'emballage de produits alimentaires et aliments et produits de luxe.

12. Utilisation du film selon l'une ou plusieurs des revendications 1 à 9 dans un emballage métallisé.

13. Utilisation du film selon l'une ou plusieurs des revendications 1 à 9 dans un emballage ayant un revêtement superficiel céramique.
